(19) Europäisches Patentamt
European Patent Office
Office européen des brevets

(11) Veröffentlichungsnummer: **0 643 081 A1**


# (12) EUROPÄISCHE PATENTANMELDUNG


(21) Anmeldenummer: **94113443.9**

(22) Anmeldetag: **29.08.94**

(51) Int. Cl.[6]: **C08F 228/02**, C08F 230/02, E21B 43/27, C14C 3/22, D06P 1/52

(30) Priorität: **10.09.93 DE 4330699**

(43) Veröffentlichungstag der Anmeldung: **15.03.95 Patentblatt 95/11**

(84) Benannte Vertragsstaaten: **DE DK GB NL**



(71) Anmelder: **HOECHST AKTIENGESELLSCHAFT**
**Brüningstrasse 50**
**D-65929 Frankfurt am Main (DE)**

(72) Erfinder: **Hoffmann, Herrmann, Dr.**
**In den Padenwiesen 13**
**D-65779 Kelkheim (DE)**
Erfinder: **Buch, Wolfgang**
**Merziger Weg 28**
**D-60529 Frankfurt (DE)**
Erfinder: **Gulden, Walter, Dr.**
**Schweriner Weg 5**
**D-65719 Hofheim (DE)**
Erfinder: **Engelhardt, Fritz, Dr.**
**Hünfelder Strasse 20**
**D-60386 Frankfurt (DE)**
Erfinder: **Funk, Rüdiger H., Dr.**
**Heine-Strasse 15**
**D-65527 Niedernhausen (DE)**
Erfinder: **Tardy, Aranka**
**Montastrasse 6**
**D-63545 Neuberg (DE)**


## (54) Vinylsulfonsäure-Polymere.


(57) Gegenstand der Erfindung sind Polymere bestehend aus
50-0,5 Gew.-%, vorzugsweise 30-0,5 Gew.-%, mindestens einer Monomer-Einheit der Formel (I)

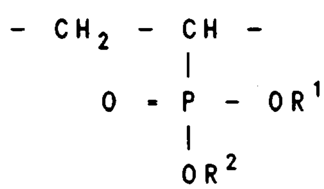

(I)

worin

$R^1$ und $R^2$ unabhängig voneinander für Wasserstoff, $(C_1\text{-}C_4)$-Alkyl, ein Ammoniumion, Alkalimetallion oder Erdalkalimetallion stehen,

und 30-99,5 Gew.-%, vorzugsweise 50-99,5 Gew.-%, mindestens einer Monomer-Einheit der Formel (II)


EP 0 643 081 A1

$$\begin{array}{llll} -CH_2- & CR^5 & - & \qquad (II) \\ & | & & \\ & R^3 & & \\ & | & & \\ & SO_3R^4 & & \end{array}$$

worin

$R^3$ für $-(CH_2)_n-$ mit n = 0-4 steht,

$R^4$ für Wasserstoff, $(C_1-C_4)$-Alkyl, ein Ammoniumion, Alkalimetallion oder Erdalkalimetallion steht,

$R^5$ für Wasserstoff, Phenyl oder $(C_1-C_4)$-Alkyl steht,

sowie gegebenenfalls 0 - 69,5 Gew.-%, vorzugsweise 0 - 40 Gew.-%, insbesondere 0 - 25 Gew.-% weiterer Monomer-Einheiten aus der Gruppe der ethylenisch ungesättigten Verbindungen.

Die erfindungsgemäßen Copolymere führen in salinen Formationswässern, insbesondere in solchen deren pH-Wert im Bereich von 3 bis 6 liegt, zu einer wirksamen Inhibierung von Erdalkalisulfat- und Calciumcarbonatablagerungen.

Beim Fördern von Öl, Wasser und Gas aus unterirdischen Formationen kann durch das Mischen von unterschiedlichen salinen Wässern im Bohrloch, durch Temperatur- sowie Druckschwankungen während der Förderung Steinbildung (Scale-Bildung), d.h. die Ausfällung von wenig löslichen Salzen der Erdalkalimetallsalze auftreten.

Bei der vielerorts in der Welt praktizierten Verwendung von eingepreßtem Meerwasser zur Reservoirdruckerhaltung kommt es (z.B.) häufig zur Ausfällung von Erdalkalisulfaten, da häufig in den Lagerstättenwässern und bei Vermischung mit Meerwasser, das üblicherweise 2-4 g/l Sulfationen enthält, die Löslichkeitsgrenzen dieser Erdalkalisulfate oft weit überschritten werden. Die Sulfate fallen in erster Linie in der Formation aus, jedoch kommt es in den Erdölproduktionssonden zu besonders störenden, schichtförmigen Ablagerungen, wenn das Injektionswasser in Richtung der Produktionssonden durchbricht. Die Förderrohre können sich dann innerhalb von Tagen bis Wochen zusetzen und es werden dadurch Produktionsausfälle oder/und teure mechanische Aufbohrarbeiten verursacht.

Des weiteren können Steinbildungen (u.a. auch) zu verstopften Bohrlöchern und Pipelines sowie zu hängengebliebenen Pumpen und Ventilen führen und erhebliche Reparaturkosten verursachen.

Es ist bekannt, daß man die Ausfällung dieser und anderer anorganischer Niederschläge durch Zugabe weit unterstöchiometrischer Mengen bestimmter (sogenannter) Steinverhinderungsmittel verhindern oder zumindestens verzögern kann. Der Mechanismus dieser Wirkung ist im einzelnen nicht bekannt, jedoch spielen die Sequestrierung und Komplexierung der gelösten mehrwertigen Ionen, als auch die Adsorption des Steinverhinderungsmittels auf den schnell wachsenden Kristallkeimen hierbei eine Rolle.

Zur Verhinderung der Steinbildung werden salinen Wässern zum einen hochmolekulare Polycarbonsäuren (bevorzugt gegen Erdalkalisulfat) und zum anderen niedermolekulare Polyelektrolyte, wie Aminomethylenphosphonsäuren (bevorzugt gegen Erdalkalicarbonat) in unterstöchiometrischen Mengen im Bereich von 1 bis 100 ppm zugesetzt [Ralston, Protection and Performance, 6, 1972, Seite 39 - 44]

Darüber hinaus werden organische Phosphorsäureester, Phosphonate und niedermolekulare Acrylate als Steinverhinderungsmittel verwendet. Aus DE-A-2525859 [ = US-A-4046707, US-A-4105551, US-A-4127483, US-A-4159946 oder GB-A-1458235] sind Phosphinocarbonsäure-Polymere bekannt, welche als Steinverhinderungsmittel geeignet sind, jedoch ergeben sich Probleme mit Formationswässern deren pH-Wert kleiner 6 ist.

Auch Polyvinylsulfonate und andere niedermolekulare Polyelektrolyte sind als wirksame Steinverhinderungsmittel beschrieben und in Erdölanlagen eingesetzt worden.

Aus WO 91/06511 ist bekannt, daß insbesondere bei Formationswässern mit einem pH-Wert kleiner 6 Polyvinylsulfonate gegenüber Polycarboxylaten eine bessere steinverhindernde Wirkung zeigen. Nachteilig ist, daß reine Polyvinylsulfonate häufig injiziert werden müssen, weil diese Polymere relativ wenig vom Formationsgestein adsorbiert bzw. zurückgehalten werden und deswegen schnell ausgefördert werden. Ein anderer Nachteil dieser Produktklasse ist ihre schlechte Analysierbarkeit. Im Konzentrationsbereich der minimal notwendigen Konzentration von einigen ppm fehlen zuverlässige Analysenmethoden.

Die Anwendung der Steinverhinderungsmittel zum Schutz gegen untertägige Ablagerungen in Erdölproduktionssonden erfolgt durch Injektion einer etwa 2-20 Gew.-%igen Lösung des Steinverhinderungsmittels (Inhibitor) in Meerwasser in die bohrlochnahe Formationszone.

Üblicherweise wählt man eine Penetrationstiefe von einigen Metern, wobei der Inhibitor mit vor- und nachgesetzten, definierten Flüssigkeitsvolumen so plaziert wird, daß er sich bei Wiederaufnahme der Förderung unter Verdünnung allmählich in dem geförderten, zur Steinbildung neigenden Mischwasser auflöst. Die zur Steinverhinderung notwendige minimale Konzentration wird mit der Zeit dabei unterschritten, so daß eine Wiederholung der Behandlung erforderlich wird. Den Zeitpunkt der notwendigen Weiterbehandlung erkennt man am Inhibitorgehalt im geförderten Wasser. Die Wirtschaftlichkeit wird durch den Zeitraum zwischen zwei Injektionen, d.h. durch die sogenannte Behandlungsfrequenz bestimmt.

Es bestand daher die Aufgabe ein Steinverhinderungsmittel zu finden, welches insbesondere bei pH-Werten von 3 bis 6 eine ausreichende steinverhindernde Wirkung aufweist und andererseits ein verbessertes Retentionsverhalten am Formationsgestein zeigt, so daß die Behandlungsfrequenz verringert werden kann. Darüber hinaus soll die Analyse der erfindungsgemäßen Polymere im Konzentrationsbereich der minimal notwendigen Konzentration (wenige ppm) zuverlässig möglich sein.

Es wurde gefunden, daß Polymerisate auf Basis von ethylenisch ungesättigten Phosphonsäuren bzw. deren Derivaten und ethylenisch ungesättigten Sulfonsäuren wirksame Steinverhinderungsmittel sind und darüber hinaus ein verbessertes Retentionsverhalten am Formationsgestein besitzen, so daß die Behandlungsfrequenz verringert wird.

Des weiteren sind die Polymerisate im Bereich der minimal notwendigen Konzentration (wenige ppm) gut analysierbar.

Gegenstand der Erfindung sind Polymere bestehend aus
50-0,5 Gew.-% , vorzugsweise 30-0,5 Gew.-%, mindestens einer Monomer-Einheit der Formel (I)

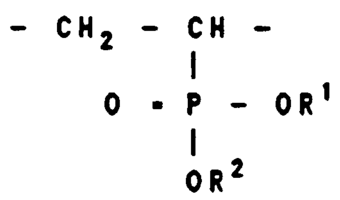

(I)

worin
$R^1$ und $R^2$ unabhängig voneinander für Wasserstoff, $(C_1-C_4)$-Alkyl, ein Ammoniumion, Alkalimetallion oder Erdalkalimetallion stehen,
und 30-99,5 Gew.-%, vorzugsweise 50-99,5 Gew.-%, mindestens einer Monomer-Einheit der Formel (II)

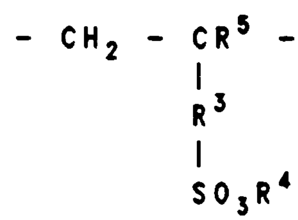

(II)

worin
$R^3$ für $-(CH_2)_n-$ mit n = 0-4 steht,
$R^4$ für Wasserstoff, $(C_1-C_4)$-Alkyl, ein Ammoniumion, Alkalimetallion oder Erdalkalimetallion steht,
$R^5$ für Wasserstoff, Phenyl oder $(C_1-C_4)$-Alkyl steht,
sowie gegebenenfalls 0 - 69,5 Gew.-%, vorzugsweise 0 - 40 Gew.-%, insbesondere 0 - 25 Gew.-%, weiterer Monomer-Einheiten aus der Gruppe der ethylenisch ungesättigten Verbindungen.

Das Alkalimetallion ist jeweils bevorzugt Natrium oder Kalium, das Erdalkalimetallion ist jeweils bevorzugt Kalzium oder Magnesium.

Die erfindungsgemäßen Polymere werden hergestellt indem man 50-0,5 Gew.-%, vorzugsweise 30-0,5 Gew.-%, Verbindungen der Formel (III)

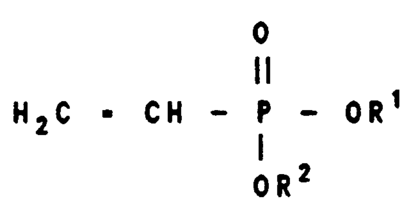

(III)

mit 30-99,5 Gew.-%, vorzugsweise 50-99,5 Gew.-%, Verbindungen der Formel (IV)

$H_2C = CR^5 - R^3 - SO_3R^4$ (IV)

sowie gegebenenfalls 0 - 69,5 Gew.-%, vorzugsweise 0 - 40 Gew.-%, insbesondere 0 - 25 Gew.-%, weitere Monomere aus der Gruppe der ethylenisch ungesättigten Verbindungen in einem geeigneten Temperaturbereich von 0 °C bis 120 °C mit einem Radikalkettenstarter polymerisiert.

Die Herstellung der Polymere kann nach Verfahren der Substanz-, Lösungs-, Fällungs-, Suspensions- oder (inversen) Emulsionspolymerisation erfolgen. Bevorzugtes Herstellungsverfahren ist die Lösungspolymerisation, auf die nachfolgend näher eingegangen wird.
Die Copolymerisation erfolgt üblicherweise in Gegenwart von unter Polymerisationsbedingungen radikalbildenden Initiatoren (Radikalkettenstarter), z.B. in Gegenwart von Peroxiden, Hydroperoxiden, Persulfaten,

Azoverbindungen oder sogenannten Redoxkatalysatoren.
Als Lösungsmittel eignen sich wäßrige Medien und organische Medien. Dabei bestehen die wäßrigen Medien aus Gemischen von Wasser und wassermischbaren organischen Lösungsmitteln, wie Alkoholen, cyclischen Estern oder Ethern oder vorteilhafterweise nur Wasser. Die organischen Medien bestehen aus wassermischbaren oder nicht-wassermischbaren organischen Lösungsmitteln, wozu auch aromatische Kohlenwasserstoffe, wie Toluol und Xylol und Paraffine zählen. Bevorzugtes Lösungsmittel ist Wasser. Die Lösungspolymerisation wird bei einer Gesamtmonomerkonzentration von 1 bis 80 Gew.-%, vorzugsweise 10 bis 60 Gew.-% durchgeführt. Die Temperaturen liegen zwischen 0 und 120 °C, vorzugsweise zwischen 60 und 100 °C.

Die Ausgangsstoffe können in dem Lösungsmittel vorgelegt werden, getrennt oder gemeinsam in das Lösungmittel eingebracht werden. Die Zugabe des gegebenenfalls in einem geeigneten Lösungsmittel gelösten Radikalkettenstarters kann vor, gleichzeitig mit oder nach der Zugabe der Ausgangsstoffe erfolgen. Zur Vermeidung der Inhibierung der Polymerisation muß die Reaktion entweder unter Rückfluß oder in einer Schutzgasatmosphäre, vorzugsweise unter Stickstoff oder Argon, durchgeführt werden.

Geeignete ethylenisch ungesättigte Comonomere sind Acrylsäure, Methacrylsäure, Vinylmethylacetamid (VIMA), Styrolsulfonsäure, Vinylpyrrolidon, Natriummethallylsulfonat, 2-Acrylamido-2-methylpropansulfonsäure, Diallyldimethylammoniumchlorid, Hydroxyethylacrylat, Allylalkohol, Vinylacetat, p-Acetoxistyrol, Hydroxistyrol oder Maleinsäureanhydrid sowie, im Falle der vorstehend genannten Säuren, deren Salze und/oder Ester.

Das Molekulargewicht der hergestellten Polymere liegt im Bereich von 1.000 bis 50000, insbesondere 4.000 bis 30.000. Dies kann durch den Einsatz von niederen Alkoholen ($C_1$-$C_5$) als Lösungsmittel und/oder auch durch Zusatz von 0,001 bis 50 Gew.-% bekannter Regler, wie Thioglykolsäure, Ethanthiol, Dodecanthiol, hydrophosphorige Säure oder Natriumhydrogensulfit zum Reaktionsansatz beeinflußt werden. Die angegebenen Gew.-% an Regler beziehen sich auf die Monomeren.
Das Molgewicht der hergestellten Polymere kann durch übliche Bestimmungsverfahren, wie Gelchromatographie oder Osmometrie, bestimmt werden.

Die viskosen Polymerlösungen können je nach Verwendungszweck verdünnt, sprühgetrocknet und/oder mit Basen auf dem gewünschten pH-Wert gebracht werden. Die Injektion der Steinverhinderungsmittel zum Schutz gegen untertägige Ablagerungen in Erdölproduktionssonden erfolgt als 2-20 gew.-%ige Lösung in flüssiger Form.

Die erfindungsgemäßen Copolymere führen in salinen Formationswässern, insbesondere in solchen deren pH-Wert im Bereich von 3 bis 6 liegt, zu einer wirksamen Inhibierung von Erdalkalisulfat- und Calciumcarbonatablagerungen.

Darüber hinaus besitzen die nach dem erfindungsgemäßen Verfahren hergestellten Polymere eine breite Verwendung und lassen sich in vielen Bereichen unter Ausnutzung ihrer vorteilhaften Eigenschaften einsetzen. Bevorzugt werden sie als Steinverhinderer z.B. in der Maschinenreinigung, Flaschenreinigung, Dampfproduktion, Kühlwasserbehandlung und bei der Erdölförderung, als Komplexier- und/oder Sequestiermittel, z.B. bei der Wasseraufbereitung, bei der Lederherstellung und in der Textil- und Papierbleiche und als Builder und Cobuilder in Waschmitteln eingesetzt.

Die Erfindung soll an Hand der folgenden Beispiele näher erläutert werden.

Herstellung der Polymere:

Die Prozentangaben sind in allen Fällen als Gewichtsprozente zu vestehen. Das in den Beispielen verwendete Wasser ist entionisiert.

Beispiel 1

In einem 500 ml Kolben werden 90 g Vinylsulfonsäure und 10 g Vinylphosphonsäure in 120 g Wasser gelöst. Anschließend wird die Mischung auf 60 °C erwärmt und durch Einleiten von Stickstoffgas inertisiert. Die Polymerisation erfolgt durch Zugabe von 3 g Kaliumpersulfat. Man erhält eine klare, leicht viskose Polymerlösung, das Molgewicht ($M_w$) beträgt 10000.

Beispiel 2

In einem 500 ml Kolben werden 90 g Vinylsulfonsäure und 10 g Vinylphosphonsäure in 400 g Wasser gelöst. Anschließend wird die Mischung auf 60 °C erwärmt und durch Einleiten von Stickstoffgas inertisiert. Die Polymerisation erfolgt durch Zugabe von 3 g Kaliumpersulfat. Man erhält eine klare, niedrigviskose

Polymerlösung ($M_w$ = 2000)

Beispiel 3

In einem 500 ml Kolben werden 70 g Vinylsulfonsäure und 30 g Vinylphosphonsäure in 400 g Wasser gelöst. Anschließend wird die Mischung auf 60°C erwärmt und durch Einleiten von Stickstoffgas inertisiert. Die Polymerisation erfolgt durch Zudosierung von 5 g Kaliumpersulfat innerhalb von 5 Stunden. Man erhält eine klare, niedrigviskose Polymerlösung ($M_w$ = 1800).

Beispiel 4

In einem 500 ml Kolben werden 70 g Vinylsulfonsäure und 30 g Vinylphosphonsäure in 400 g Wasser gelöst. Anschließend wird die Mischung auf 80°C erwärmt und durch Einleiten von Stickstoffgas inertisiert. Die Polymerisation erfolgt durch Zudosierung von 5 g Kaliumpersulfat innerhalb von 5 Stunden. Man erhält eine klare, niedrigviskose Polymerlösung ($M_w$ = 1500).

Beispiel 5

In einem 500 ml Kolben werden 98 g Vinylsulfonsäure und 2 g Vinylphosphonsäure in 120 g Wasser gelöst. Anschließend wird die Mischung auf 80°C erwärmt und durch Einleiten von Stickstoffgas inertisiert. Die Polymerisation erfolgt durch Zugabe von 1 g 2,2'-Azobis-(2-amidinopropan)dihydrochlorid. Man erhält eine klare, leicht viskose Polymerlösung ($M_w$ = 10000).

Beispiel 6

In einem mit Kühler, Thermometer, Zulaufvorrichtung, Stickstoffein- und -auslaß versehenen Rührreaktor mit 2,5 l Inhalt werden 850 g Natriumvinylsulfonat, 50 g Vinylphosphonsäure und 600 g Wasser vorgelegt. Die Mischung wird auf 60°C erwärmt und 30 Minuten durch Einleiten von Stickstoff inertisiert.

Anschließend werden gleichzeitig 100 g Acrylsäure und 1 g Kaliumpersulfat gelöst in 100 g Wasser innerhalb von 5 Stunden zudosiert ($M_w$ = 20000).

Beispiel 7

In einem Rührreaktor nach Beispiel 6 werden 600 g Natriumvinylsulfonat, 200 g Natriumvinylphosphonat, 200 g Vinylmethylacetamid und 1000 g Wasser auf 80°C erhitzt. Anschließend wird die Lösung durch Einleitung von Stickstoff inertisiert und durch Zudosierung von 10 g Ammoniumpersulfat gelöst in 100 g Wasser in 5 Stunden polymerisiert ($M_w$ = 10000).

Beispiel 8

In einem Rührreaktor nach Beispiel 6 werden 85 g Natriumvinylsulfonat, 5 g Natriumvinylphosphonat und 900 g Wasser auf 80°C erhitzt und durch Einleiten von Stickstoff innerhalb von 30 Minuten inertisiert. Anschließend wird durch gleichzeitige Zudosierung von 10 g Ammoniumpersulfat gelöst in 100 g Wasser und 10 g Styrolsulfonsäure gelöst in 100 g Wasser innerhalb von 5 Stunden polymerisiert ($M_w$ = 5000).

Tabelle 1

| Beispiel | Vinylsulfonsäure [Gew.-%] | Vinylphosphonsäure [Gew.-%] | Zusätzliches Monomer [Gew.-%] | | Wasser [g] | Temp °C | $M_w$ |
|---|---|---|---|---|---|---|---|
| 9 | 80 | 5 | 15 | Vinylmethylacetamid | 900 | 60 | 10.000 |
| 10 | 90 | 5 | 5 | Vinylpyrrolidon | 900 | 60 | 6.000 |
| 11 | 1 | 10 | 89 | Natriummethallylsulfonat | 900 | 60 | 8.000 |
| 12 | 90 | 5 | 5 | 2-Acrylamido-2-methyl-propansulfonsäure | 1900 | 60 | 12.000 |
| 13 | 85 | 5 | 10 | Methacrylsäure | 1900 | 60 | 10.000 |
| 14 | 30 | 10 | 60 | Acrylsäure | 1900 | 60 | 15.000 |
| 15 | 70 | 10 | 20 | Acrylsäure | 1900 | 60 | 6.000 |
| 16 | 70 | 10 | 20 | Styrolsulfonsäure | 1900 | 60 | 5.000 |
| 17 | 95 | 3 | 2 | Diallyldimethylammoniumchlorid | 900 | 60 | 6.000 |
| 18 | 85 | 5 | 10 | Hydroxiethylacrylat | 1900 | 60 | 4.000 |

Die beanspruchten Polymere können auch nach einem Batch-Polymerisationsverfahren hergestellt werden. Hierzu werden die Monomere zusammen mit dem Lösungsmittel und dem Radikalkettenstarter vorgelegt und nachfolgend die Polymerisation durch Inertisierung und Erhöhung der Temperatur durchgeführt.

Beispiele 9-18 (Batchverfahren)

In einem mit Heizbad, Kühler, Thermometer, Zugabevorrichtung, Stickstoffein- und -auslaß versehenen Rührreaktor mit 2,5 l Inhalt werden die in Tabelle 2 angegebenen Monomeren in der entsprechenden Menge Wasser gelöst und der pH der Lösung mit Salzsäure bzw. Natronlauge auf pH 6-8 eingestellt. Anschließend wird 30 Minuten mit Stickstoff inertisiert und gleichzeitig die Temperatur wie angegeben erhöht. Die Polymerisation erfolgt durch zweimalige Zugabe von 1 g Ammoniumpersulfat mit anschließendem 1-stündigen Nachrühren. Man erhält klare Polymerlösungen mit den angegebenen Molgewichten.

Beispiele 19-27 (Dosiervariante)

In einem mit Heizbad, Kühler, Thermometer, Zulaufvorrichtung, Stickstoffein- und -auslaß versehenen Rührreaktor mit 2,5 l Inhalt wird die in Tabelle 2 angegebene Menge Vinylphosphonsäure in der entsprechenden Menge Wasser gelöst und der pH der Lösung mit Salzsäure bzw. Natronlauge auf pH 6-8 eingestellt.
Anschließend wird 30 Minuten mit Stickstoff inertisiert und gleichzeitig die Temperatur wie angegeben erhöht. Zu dieser Reaktionsmischung werden nun gleichmäßig innerhalb von 7 Stunden eine Lösung von 2g Ammoniumpersulfat in 58g Wasser und innerhalb 6 Stunden die angegebene Menge Vinylsulfonat sowie die angegebene Menge des dritten Monomeren gelöst in 200g Wasser zudosiert.
Man erhält klare Polymerlösungen mit den angegebenen Molgewichten.

Tabelle 2

| Beispiel | Vinylsulfonsäure [Gew.-%] | Vinylphosphonsäure [Gew.-%] | Zusätzliches Monomer [Gew.-%] | | Wasser [g] | Temp. °C | $M_w$ |
|---|---|---|---|---|---|---|---|
| 19 | 80 | 5 | 15 | Vinylmethylacetamid | 900 | 60 | 10.000 |
| 20 | 1 | 10 | 89 | Natriummethallylsulfonat | 1900 | 60 | 8.000 |
| 21 | 90 | 5 | 5 | 2-Acrylamido-2-methyl-propansulfonsäure | 1900 | 60 | 12.000 |
| 22 | 85 | 5 | 10 | Methacrylsäure | 1900 | 60 | 10.000 |
| 23 | 30 | 10 | 60 | Acrylsäure | 1900 | 60 | 15.000 |
| 24 | 70 | 10 | 20 | Acrylsäure | 1900 | 60 | 6.000 |
| 25 | 70 | 10 | 20 | Styrolsulfonsäure | 1900 | 60 | 5.000 |
| 26 | 85 | 5 | 10 | Hydroxiethylacrylat | 1900 | 60 | 6.000 |
| 27 | 95 | 3 | 2 | Diallyldimethylammoniumchlorid | 900 | 60 | 4.000 |

Anwendungsbeispiele

1. Steinverhinderer Bariumsulfat

Die steinverhindernde Wirkung wurde mit einem Rohrverstopfungstest (tube plugging test) [P. Read, J.K. Ringen, $6^{th}$ SPE-Symposium, Dallas/Texas, U.S.A., 1982 und SPE-Paper Nr. 10593] nachgewiesen. Das Prinzip dieses Prüfverfahrens besteht in der Verfolgung des Druckaufbaus Innerhalb einer flüssigkeitsduchströmten, thermostatisierten Kapillare durch Ablagerung von Feststoffen. Gewählt wurde ein kommerzielles Gerät der Fa. S.B. Systems, Aberdeen, des Typs PMAC.

a) Steinverhinderer Bariumsulfat bei nahezu neutralem pH-Bereich:

Bei Prüfen auf die Verhinderung von Bariumsulfatablagerungen wurden folgende Lösungen gemischt:

| | |
|---|---|
| Sulfat-Lösung (pH = 7,6) | 74,92 g/l NaCl |
| | 0,93 g/l $Na_2SO_4$ |
| | 2,35 g/l $NaHCO_3$ |
| Barium-Lösung (pH = 6,0) | 70,09 g/l NaCl |
| | 1,20 g/l $BaCl_2$ |
| | 1,93 g/l $CaCl_2 \cdot 2H_2O$ |
| | 3,81 g/l $MgCl_2 \cdot 6H_2O$ |

Mit einer Schlauchpumpe wurden die Barium- und die Sulfatlösung im Verhältnis 1:1 v/v kontinuierlich vermischt (Lösung 1) und durch eine Edelstahlkapillare von 1 mm Innendurchmesser gepumpt. Der pH-Wert der Mischung betrug 7,2. Ein empfindlicher Drucksensor registrierte den Druckanstieg in der auf 80 °C temperierten Kapillare.

Ein leichter Anstieg auf ca. 0,2 bar wurde abgewartet, um die Abscheidung einer geringen Bariumsulfatmenge auf der Stahloberfläche zu erzeugen. Dann wurde die inhibitorfreie Lösung (Lösung 1) rasch durch eine inhibitorhaltige Lösung (Lösung 1 mit Inhibitor) gleicher Zusammensetzung ersetzt. Blieb der Druck konstant, wurde auf erfolgreiche Inhibierung der $BaSO_4$-Abscheidung geschlossen. Stieg der Druck an. war die Inhibitormenge bzw. bei gleicher Konzentration die Art des Inhibitors ungenügend zur Verhinderung der Steinbildung. Für die Effektivitätsbeurteilung wurde somit die minimale Konzentration an Inhibitor genommen, die gerade noch die Ablagerung verhindert.

Tabelle 3

| Minimale Konzentrationen zur Inhibierung der Steinbildung | |
|---|---|
| Beispiel 1 | 15 mg/l |
| Beispiel 2 | 12,5 mg/l |
| Beispiel 3 | 15 mg/l |
| Beispiel 4 | 20 mg/l |
| Beispiel 5 | 25 mg/l |
| Beispiel 6 | 17,5 mg/l |
| Beispiel 7 | 25 mg/l |
| Beispiel 8 | 40 mg/l |
| Beispiel 9 | 40 mg/l |
| Beispiel 10 | 35 mg/l |
| Beispiel 11 | 30 mg/l |
| Beispiel 12 | 30 mg/l |
| Beispiel 13 | 35 mg/l |
| Beispiel 24 | 25 mg/l |

Die Wirksamkeiten der erfindungsgemäßen Polymere sind durch die Daten in der Tabelle 3 belegt.

b) Steinverhinderer Bariumsulfat bei niedrigen pH-Bereichen:

Die hergestellten Polymere wurden mit dem vorstehend beschriebenen Rohrverstopfungstest hinsichtlich der Verhinderung von Bariumsulfatablagerungen geprüft.
Zur Prüfung der Wirksamkeit der hergestellten Polymere, insbesondere bei pH-Bereichen von 3 bis 6, wurde ein in der Nordsee vorkommendes Lagerstättenwasser (pH = 4,5) der Zusammensetzung [Gramm pro Liter; g/l]:

| | | | |
|---|---|---|---|
| NaCl | 91,85 | $BaCl_2$ | 1,65 |
| $CaCl_2 \cdot 2H_2O$ | 1,39 | $MgCl_2 \cdot 6H_2O$ | 3,05 |
| $SrCl_2 \cdot 6H_2O$ | 1,08 | $NaHCO_3$ | 0,77 |
| KCl | 3,28 | | |

mit synthetischem Nordseewasser (pH = 4,5) der Zusammensetzung [g/l]:

| | | | |
|---|---|---|---|
| NaCl | 27,9 | $CaCl_2 \cdot 2H_2O$ | 1,47 |
| $MgCl_2 \cdot 6H_2O$ | 5,2 | $MgSO_4 \cdot 7H_2O$ | 7,18 |
| $NaHCO_3$ | 0,14 | KCl | 0,76 |

untersucht.
Der pH-Wert des synthetischen Nordseewassers wurde mittels Salzsäure auf einen pH-Wert von 4,5 eingestellt, da das natürliche Lagerstättenwasser einen hohen Kohlensäuregehalt aufweist.

Es wurden folgende minimale Konzentrationen zur Inhibierung der Steinbildung gefunden:

| Minimale Inhibitorkonzentrationen zur Steinverhinderung | |
| --- | --- |
| Polymer nach Beispiel 2 | 120 mg/l |
| Polymer nach Beispiel 3 | 125 mg/l |
| Polymer nach Beispiel 4 | 130 mg/l |

Die vorstehend gezeigten Ergebnisse zeigen, daß die hergestellten Polymere bei niedrigem pH-Wert eine steinverhindernde Wirkung besitzten.

2. Retentionsverhalten

Die Adsorption bzw. Retention der hergestellten Polymere auf Gestein wurde mit verschiedenen Methoden untersucht. Als Modell eines Formationsgesteins fand dabei ein Bentheimer Sand einer mittleren Korngröße von 0,09 mm und 0,089 $m^2/g$ spezifischer Oberfläche Verwendung.

a) Indirekte Methode:

Als indirekte Methode des Nachweises der gesteigerten Adsorptionsneigung der erfindungsgemäßen Polymere wurde eine Modifikation des Rohrverstopfungstests herangezogen.

Wie oben beschrieben, wurde der Inhibitor dem Sulfat enthaltenden Wasser zudosiert, wobei jeweils 500 ml Sulfatwasser mit 500 ml Bariumlösung über eine Schlauchpumpe synchron der Kapillare zugeführt wurde. Zur Beurteilung der Adsorptionsneigung eines Prüfproduktes wurde die Sulfatlösung jeweils mit 200 g Sand versetzt und die minimal notwendige Inhibitorkonzentration (MIK) in Gegenwart und Abwesenheit des Adsorptionsmittels bestimmt. Es wurde dabei in Gegenwart von Sand erwartungsgemäß eine scheinbare Erhöhung der MIK festgestellt, wobei die Differenz zweifellos in erster Linie mit der Menge des am Sand adsorbierten Anteils des Inhibitors zu erklären ist.

In der nachstehenden Aufstellung (Tab. 4) sind die ohne und mit Sand bestimmten Werte für die MIK für einige der Verbindungen aufgeführt.

Tabelle 4

Änderung der MIK infolge Adsorption

| Minimale Inhibitorkonzentrationen zur Steinverhinderung [mg/l] | | |
|---|---|---|
| | ohne | mit Sand |
| Polyvinylsulfonat | 15 mg/l | 17,5 mg/l |
| Beispiel 1 | 17,5 | 22,5 |
| Beispiel 2 | 15 | 27 |
| Beispiel 3 | 15 | 25 |
| Beispiel 4 | 20 | 35 |
| Beispiel 5 | 20 | 22,5 |
| Beispiel 6 | 17,5 | 25 |
| Beispiel 7 | 25 | 30 |
| Beispiel 8 | 40 | 47,5 |
| Beispiel 10 | 35 | 40 |

In allen Fällen war die scheinbar notwendige höhere Konzentration infolge des Adsorptionsverlustes am unterschichteten Sand höher als in Abwesenheit von Sand. Die erfindungsgemäßen Produkte werden jedoch offensichtlich stärker adsorbiert als Polyvinylsulfonat, da die Differenzen größer sind. Eine direkte Bestimmung des Adsorptionsverlustes bestätigt die indirekten Befunde.

b) Direkte Methode:

Da ein Vergleich mit nicht Phosphor-enthaltenden Produkten gesucht war, wurde bei den direkten Adsorptionsversuchen als analytische Methode die Bestimmung des gelösten organischen Kohlenstoffs verwendet.

Die vergleichenden statischen Adsorptionsversuche wurden einheitlich so durchgeführt, daß Lösungen mit 31 ± 1 mg/l Polymer in einem standardisierten Salzwasser der Zusammensetzung 30 g/l NaCl, 1 g/l $Na_2SO_4$ und 1 g/l $NaHCO_3$ mit dem beschriebenen Bentheimer Sand bei Raumtemperatur [ = 21 ° C] äquilibriert wurden. Es wurde jeweils vor und nach Adsorption von jeweils 500 ml obiger Polymerlösungen mit 200 g Sand die Konzentration des gelösten organischen Kohlenstoffs bestimmt.

Es wurden gefunden:

Tabelle 5

| | organischer Kohlenstoff in mg/l | | |
|---|---|---|---|
| | vor Adsorption | nach Adsorption | µg/g |
| Polyvinylsulfonat | 10,3 | 8,3 | 16,5 |
| Beispiel 2 | 10,4 | 7,3 | 38,4 |
| Beispiel 3 | 10,5 | 6,7 | 43,4 |
| Beispiel 6 | 11,8 | 7,1 | 103,6 |

Die Zahlen in der letzten Spalte bedeuten die pro Gramm Sand adsorbierte Menge des Polymers in µg.

In einem Fall wurde die erhöhte Adsorption auch in einem Flutversuch nachgewiesen, der die Verhältnisse bei der Anwendung in der Praxis besser simuliert.

Es wurden Sandschüttungen in einem Glasrohr von 1 cm innerem Durchmesser hergestellt. Eine Bestimmung des Porenvolumens (PV) von 200 g eingefülltem Sand erbrachte Werte von 85 ± 1 ml. Über die Sandpackung wurden zuerst 1 l Salzwasserlösung der Zusammensetzung 30 g/l NaCl, 1 g/l $NaHCO_3$ und 1 g/l $Na_2SO_4$ mit ca. 10 ml/Min. Eluiergeschwindigkeit gegeben. Dann wurden 245 ml = 3 PV einer Lösung mit jeweils 31 mg/l Polyvinylsulfonat (PVS) bzw.

Beispiel 2 in dem gleichen Wasser zugegeben und anschließend mit 10 PV polymerfreien Salzwasser eluiert. Vom Durchlauf wurden Proben genommen und auf Gehalt an gelöstem organischen Kohlenstoff analysiert. Es wurden die in der Tabelle 6 enthaltenen Werte bestimmt. Wie aus dem Vergleich der Zahlen hervorgeht, wird das Produkt Beispiel 2 erwartungsgemäß stärker adsorbiert und deswegen verzögert eluiert. Dieses Ergebnis bestätigt die indirekten Nachweise der Adsorptionsverbesserung und stimmt mit den statischen Resultaten gut überein und läßt sich auch auf den pH-Bereich von 3 bis 6 übertragen.

Tabelle 6

| Flutungsexperiment | | | |
|---|---|---|---|
| Fraktion | ml | Gehalt an Kohlenstoff in mg/l | |
| | | PVS | Beispiel 2 |
| 1 | 50 - 60 | 0 | 0 |
| 2 | 75 - 85 | 1,2 | 0,2 |
| 3 | 95 - 105 | 2,4 | 1,4 |
| 4 | 140 - 150 | 6,4 | 2,9 |
| 5 | 190 - 200 | 10,4 | 6,9 |
| 6 | 240 - 250 | 10,4 | 5,8 |
| 7 | 290 - 300 | 8,0 | 3,7 |
| 8 | 340 - 350 | 2,8 | 1,9 |
| 9 | 390 - 400 | 0,5 | 1,1 |
| 10 | 440 - 450 | 0,2 | 0,8 |
| 11 | 490 - 500 | 0 | 0,6 |
| 12 | 590 - 600 | 0 | 0,5 |
| 13 | 690 - 700 | 0 | 0,3 |
| 14 | 790 - 800 | 0 | 0,2 |

## Patentansprüche

1. Polymere bestehend aus 50-0,5 Gew.-%, vorzugsweise 30-0,5 Gew.-%, mindestens einer Monomer-Einheit der Formel (I)

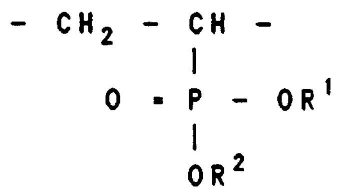

(I)

worin

$R^1$ und $R^2$ unabhängig voneinander für Wasserstoff, $(C_1-C_4)$-Alkyl, ein Ammoniumion, Alkalimetallion oder Erdalkalimetallion stehen,

und 30-99,5 Gew.-%, vorzugsweise 50-99,5 Gew.-%, mindestens einer Monomer-Einheit der Formel (II)

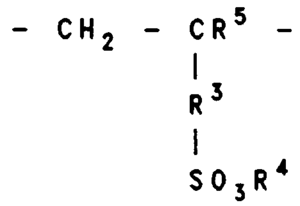

(II)

worin

$R^3$ für $-(CH_2)_n-$ mit n = 0-4 steht,

$R^4$ für Wasserstoff, $(C_1-C_4)$-Alkyl, ein Ammoniumion, Alkalimetallion oder Erdalkalimetallion steht,

$R^5$ für Wasserstoff, Phenyl oder $(C_1-C_4)$-Alkyl steht,

sowie 0 - 69,5 Gew.-%, vorzugsweise 0 - 40 Gew.-%, insbesondere 0 - 25 Gew.-% weiterer Monomer-Einheiten aus der Gruppe der ethylenisch ungesättigten Verbindungen.

2. Polymere nach Anspruch 1, dadurch gekennzeichnet, daß sie als weitere ethylenisch ungesättigte Monomere Acrylsäure, Methacrylsäure, Vinylmethylacetamid (VIMA), Styrolsulfonsäure, Vinylpyrrolidon, Natriummethallylsulfonat, 2-Acrylamido-2-methylpropansulfonsäure, Diallyldimethylammoniumchlorid, Hydroxyethylacrylat, Allylalkohol, Vinylacetat, p-Acetoxistyrol, Hydroxistyrol oder Maleinsäureanhydrid sowie, im Falle der vorstehend genannten Säuren, deren Salze und/oder Ester einpolymerisiert enthalten.

3. Verfahren zur Herstellung der Polymere nach Anspruch 1 oder 2, dadurch gekennzeichnet, daß man 50-0,5 Gew.-%, vorzugsweise 30-0,5 Gew.-%, der Monomere der Formel (III),

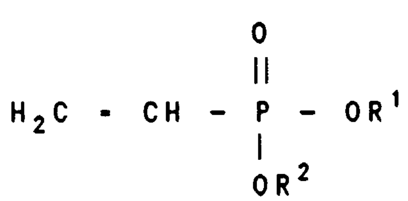

(III)

30-99,5 Gew.-%, vorzugsweise 50-99,5 Gew.-%, der Monomere der Formel (IV)

$H_2C = CR^5 - R^3 - SO_3R^4$ (IV)

sowie 0-69,5 Gew.-%, vorzugsweise 0-40 Gew.-%, insbesondere 0-25 Gew.-%, der weiteren ethylenisch ungesättigten Monomere in Wasser und/oder in einem mit Wasser mischbaren organischen Lösungsmittel, gegebenenfalls unter Zugabe eines Reglers, in Gegenwart eines Radikalkettenstarters bei Temperaturen zwischen 0 bis 120 °C, vorzugsweise 60 bis 100 °C polymerisiert.

**4.** Verfahren zur Herstellung der Polymere nach Anspruch 3, dadurch gekennzeichnet, daß man 50-0,5 Gew.-% der Monomere der Formel (III), 50-99,5 Gew.-% der Monomere der Formel (IV) sowie 0-49 Gew.-% der weiteren ethylenisch ungesättigten Monomere in Wasser und/oder in einem mit Wasser mischbaren organischen Lösungsmittel unter Zugabe von 0,001 bis 50 Gew.-% eines Reglers in Gegenwart eines Radikalkettenstarters polymerisiert.

**5.** Verfahren zur Herstellung der Polymere nach Anspruch 3 oder 4, dadurch gekennzeichnet, daß die Gesamtmonomerkonzentration bei der Polymerisation zwischen 1 - 89 Gew.-% , vorzugsweise 10 - 60 Gew.-% beträgt.

**6.** Verwendung der Polymere gemäß Anspruch 1 oder 2 als Steinverhinderer in der Maschinenreinigung, Flaschenreinigung, Dampfproduktion, Kühlwasserbehandlung und bei der Erdölförderung, als Komplexier- und/oder Sequestiermittel bei der Wasseraufbereitung, bei der Lederherstellung und in der Textil- und Papierbleiche und als Builder und Cobuilder in Waschmitteln.

**7.** Verwendung der Polymere gemäß Anspruch 1 oder 2 als Steinverhinderer in der Erdölförderung bei Formationswässern deren pH-Wert im Bereich von 3 bis 6 liegt.

Europäisches Patentamt

# EUROPÄISCHER RECHERCHENBERICHT

Nummer der Anmeldung
EP 94 11 3443

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP-A-0 112 520 (CASELLA A.G.)<br>* Anspruch 1 *<br>* Seite 12, Zeile 17 - Seite 13, Zeile 21 * | 1-7 | C08F228/02<br>C08F230/02<br>E21B43/27<br>C14C3/22<br>D06P1/52 |
| X | EP-A-0 113 438 (CASSELLA A.G.)<br>* Ansprüche 1,8-11 * | 1-7 | |
| | | | **RECHERCHIERTE SACHGEBIETE (Int.Cl.6)** |
| | | | C08F |

Der vorliegende Recherchenbericht wurde für alle Patentansprüche erstellt

| Recherchenort | Abschlußdatum der Recherche | Prüfer |
|---|---|---|
| DEN HAAG | 28. Dezember 1994 | Cauwenberg, C |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)